# EUROPEAN PATENT SPECIFICATION

(11) **EP 3 599 139 B1**
(45) Date of publication and mention of the grant of the patent: **30.06.2021**
(21) Application number: 19188384.2
(22) Date of filing: 25.07.2019
(51) Int. Cl.: B60S 3/06

(54) **MOVABLE PORTAL WASHING PROCESS AND SYSTEM**
VERFAHRBARES PORTAL WASCHVERFAHREN UND WASCHSYSTEM
PROCÉDÉ ET SYSTÈME DE LAVAGE À PORTIQUE MOBILE

(30) Priority: 25.07.2018 IT 201800007494
(43) Date of publication of application: 29.01.2020
(73) Proprietor: Ceccato S.p.A., 36075 Alte Ceccato di Montecchio Maggiore (VI) (IT)
(72) Inventor: PILLON, Pierangelo, 36040 Brandola (Vicenza) (IT)
(74) Representative: Rapisardi, Mariacristina

(56) References cited:
- DE-A1- 19 524 748
- DE-A1-102014 112 388
- GB-A- 2 225 561
- JP-B2- 3 066 420

## Description

The present invention relates to a washing system and method of a vehicle.

A washing system of vehicles of known type comprises an upturned U-shaped portal that is translatable in a horizontal direction.

This portal is provided with at least two rotating brushes hanging from said portal and horizontally slideable along a direction that is perpendicular to the translation direction of the portal.

Usually, these brushes hang from carriages sliding on a beam of the portal. Known washing systems comprise a locking mechanism for locking the orientation of the brushes inside the plane defined by the portal.

Typically, the locking mechanism enables the orientation of the brushes to be locked in a vertical direction and in a direction tilted by about 10 degrees with respect to the vertical direction.

Said known washing systems further comprise a control unit programmed to control a washing cycle.

In particular, the consolidated washing cycle cleans in two passes with the brushes the side surface, including the front, sides and rear of a vehicle.

The control unit is programmed to drive the movement of the portal from the head to the rear of the vehicle in a first pass and from the rear to the head in a second pass, or vice versa.

During the first pass over the sides of the vehicle, the control unit is programmed to constrain the brushes in the vertical orientation and command the displacement of the carriages from which the brushes hang to exert the correct washing pressure on the contact zones between the brushes and the sides of the vehicle. The brushes with a vertical orientation are suitable for washing the sides of the vehicle from the belt downwards.

During the second pass over the sides, the control unit is programmed to constrain the brushes in the tilted orientation typically by 10 degrees with respect to the vertical so as to wash zones of the sides of the vehicle that have not been affected by cleaning during the first pass. The brushes with a tilted orientation are suitable for washing the sides of the vehicle from the belt upwards as the shape of the sides of many vehicles tends to have a tapered conformation from the belt upwards. Also in this case, the control unit is programmed to command the displacement of the carriages from which the brushes hang to exert the correct washing pressure on the contact zones between the brushes and the sides of the vehicle

It is thus clear that in the two passes over the sides, part of the sides will be at a central height (the belt of the vehicle) where the contact with the brushes occurs during both the passes, whilst at the upper part and the lower part of the sides the contact occurs on the occasion of just one pass.

The lower part of the sides is thus the most penalized, being in general the dirtiest surface of the vehicle.

Using two different orientations of the brushes in the two washing passes of the sides of the vehicle on the one hand enables the greatest possible surface of the sides to be contacted with the brushes, on the other hand unbalances the mechanical washing action, improving the efficiency of washing of the sides from the belt upwards of the vehicle.

Disadvantageously, the part of the sides from the belt downwards of the vehicle, usually the dirtiest, is affected by the mechanical cleaning action of the brushes in just one pass, with the risk of leaving the surface of the sides in non-optimum conditions of cleanness at the end of the washing cycle.

A further drawback of this programming of the washing cycle is found in the presence of vehicles of great height, such as for example trucks, vans and camper vans in which the sides tend to be vertical apart from a small tapered portion towards the roof of the vehicle.

For such vehicles, the known washing systems program the washing cycle using vertical orientation of the brushes in both the washing passes of the sides of the vehicle.

Disadvantageously, by adopting this programming, the tapered part of the sides is not affected by the cleaning action of the brushes, thus not carrying out complete cleaning of the surface of the sides of the vehicle. DE 10 2014 112388 A1 discloses the preamble of claim 1.

The technical task of the present invention is to devise a system that is able to wash uniformly and effectively all the surface of the sides of a vehicle, regardless of the shape thereof.

A further technical task of the present invention is to devise a washing system of a vehicle programmed to adapt dynamically the orientation of the brushes to the shape of the sides of a vehicle during the passage of the portal over the vehicle. The technical task, and these and other objects, are achieved according to the present invention by providing a washing system and method of a vehicle.

The washing system of a vehicle comprises a control unit, a platform having a longitudinal translation guide, a portal mounted translatably along said guide for the passage over the vehicle, said portal comprising at least two diametrically opposite uprights connected by at least one cross member, at least two support means supported by said cross member slidably along said cross member, at least two brushes each rotating around a corresponding rotation axis hinged in aerial suspension on a corresponding support means, locking means of the orientation of each rotation axis of said brushes and detection means of the washing pressure exerted by the brushes on the vehicle.

This washing system of a vehicle is characterized in that said control unit is programmed with at least one first washing programme part that: drives the portal from a first position to a second position on the guide, passing the portal over the vehicle, deactivates said locking means, leaving said brushes free to oscillate so as to adapt dynamically to the shape of the sides of the vehicle during said passage, commands detection of the current value of the washing pressure of the sides during said passage, compares said current value of the washing pressure with a threshold value during said passage, commands the reciprocal movement of said support means so as to maintain during said passage the current value of the washing pressure equal to said threshold value.

Advantageously, the control unit is programmed with at least one further washing programme part that drives the portal from said second position to said first position on the guide, passing the portal over the vehicle, deactivates said locking means, leaving said brushes free to oscillate so as to adapt dynamically to the shape of the sides of the vehicle during said passage or activates said locking means so as to lock the orientation of the rotation axis of said brushes, commands the detection of the current value of the washing pressure during said passage, compares said current value of the washing pressure with a threshold value during said passage, commands the reciprocal movement of said support means so as to maintain during said passage the current value of the washing pressure equal to said threshold value.

Advantageously, the washing system is programmed to ensure that the orientation of the brushes adapts freely to the shape of the sides of the vehicle in a first passage of the portal over the vehicle. In fact, during the passage of the portal over the vehicle, the control unit, by keeping the locking means disabled, can drive the support means to compensate a variation in washing pressure due to a variation in the shape of the sides of the vehicle by returning the washing pressure to the set threshold value.

The brushes contacting the surface of the sides of the vehicle are thus oriented so as to rest on the greatest possible surface.

Advantageously, the washing system is programmed to maintain the orientation of the brushes free or to constrain the orientation of the brushes in a second passage of the portal over the vehicle depending on the vehicle to be washed.

In this manner, depending on the type of vehicle, the washing system is programmed to carry out two passages of the portal over the vehicle, leaving the orientation of the brushes free to vary as a function of the development of the shape of the sides of the vehicle or to execute a first passage with the brushes in a free orientation and a second passage with the brushes in a constrained orientation. The present invention also relates to a washing method for performing said at least one first washing programme part with a washing system as disclosed.

Further characteristics and advantages will become more apparent from the following detailed description of an embodiment of the vehicle washing system according to the invention, illustrated by way of indicative and non-limiting example in the accompanying figures, wherein:

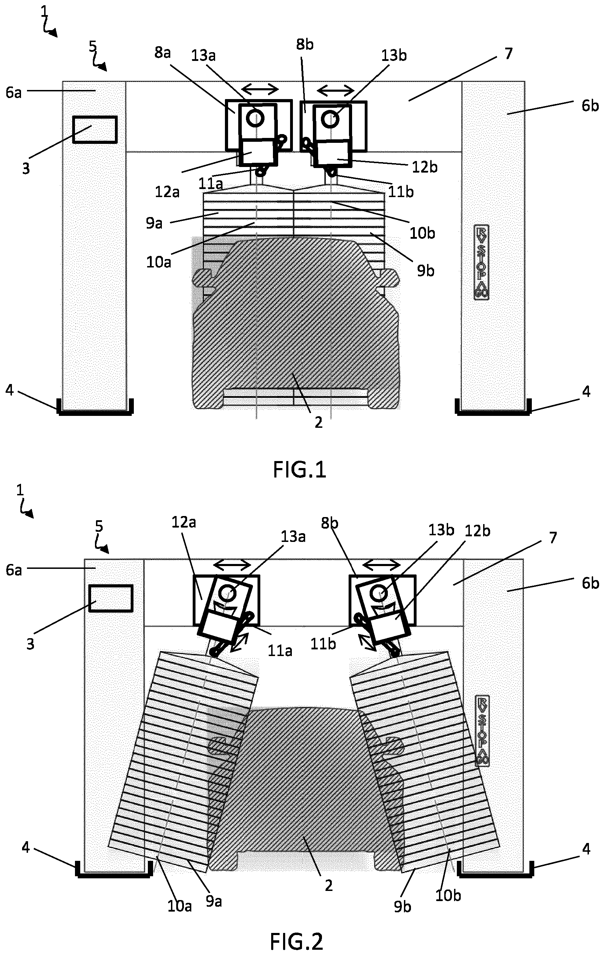

figure 1 shows a front view of the washing system during the execution of the second or third washing programme part with orientation of the axes of the brushes locked in a vertical position,
figure 2 shows a front view of the washing system during the execution of the first washing programme part,

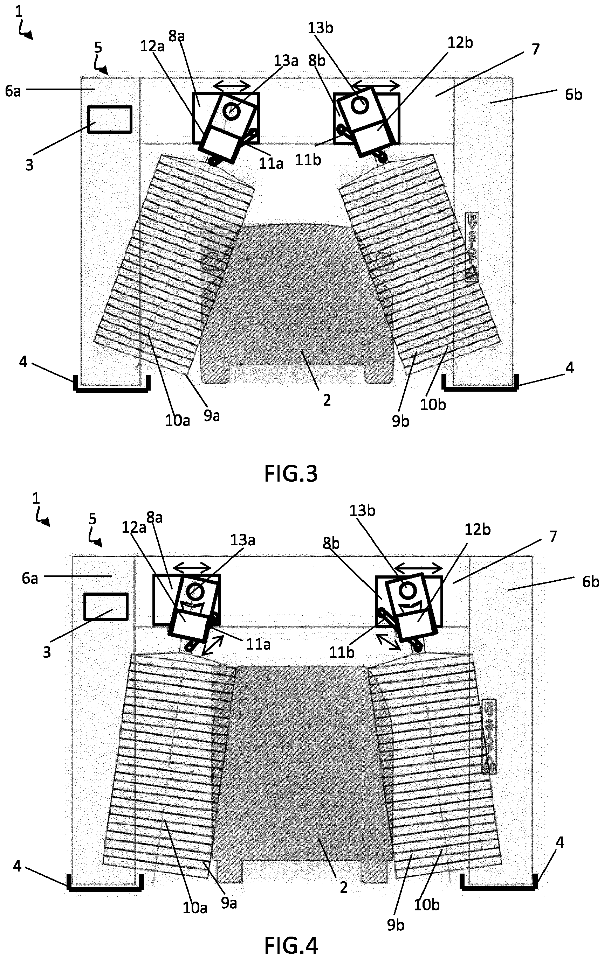

figure 3 shows a front view of the washing system during the execution of the fourth washing programme part in the mode with orientation of the axes of the brushes locked in a tilted position,

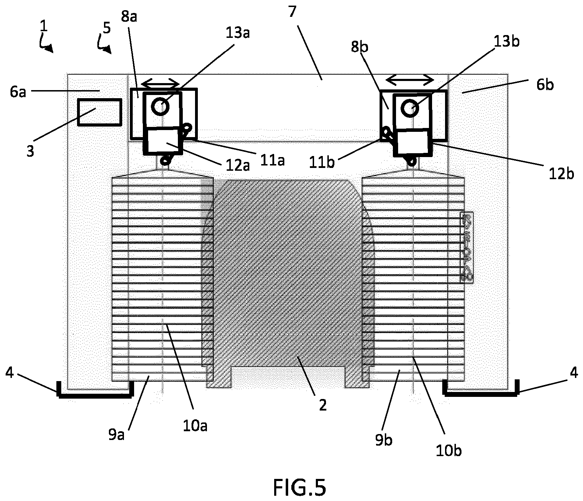

figures 4 and 5 show a front view of the washing system during the execution of the first and the fourth washing programme part of a vehicle of great height in which the fourth part is executed with orientation of the axes of the brushes locked in a vertical position.

With reference to the figures, a washing system 1 of a vehicle 2 is shown comprising a platform that has a fixed longitudinal, in particular, horizontal, translation guide 4 (rails on which the portal slides).

Along the guide 4, a portal 5 is mounted translatably for the passage on the vehicle 2.

The portal 5 comprises a gearmotor unit that permits translation along said guide 4. The portal 5 comprises at least one cross member 7 and at least two uprights 6a 6b connected to the ends of the cross member 7.

The washing system 1 comprises at least two support means 8a 8b that are slidingly supported along the cross member 7.

Preferably, the support means 8a 8b each comprise a carriage and the cross member 7 comprises a rail on which the carriages are translated by gearmotor units.

The washing system 1 has at least two brushes 9a 9b, each rotating around a corresponding rotation axis 10a 10b.

Each brush 9a, 9b is provided with a plurality of cleaning elements, such as for example bristles or belts.

In particular, each rotation axis 10a, 10b has in an upper end a hinge pin 13a, 13b by which it is hinged in aerial suspension on a corresponding support means 8a 8b. In this manner, each rotation axis 10a, 10b is rotationally translatable in the plane defined by the portal and the brushes 9a 9b are thus free to oscillate, changing orientation in the plane defined by the portal, rotatably constrained on the respective support means 8a 8b.

In the rest position brushes 9a 9b are vertical, in other words oriented with the rotation axis 10a 10b along a direction that is perpendicular to the plane defined by the platform.

Each brush 9a 9b is connected to a respective locking means 11a 11b for locking the orientation of the rotation axis 10a 10b of the brush 9a 9b. Substantially, each locking means 11a 11b can constrain rigidly the orientation of the rotation axis 10a 10b of the respective brush 9a 9b in the plane of the portal from a zero angle corresponding to the vertical direction to a non-zero angle corresponding to a direction that is tilted with respect to the vertical direction.

Preferably, each locking means 11a 11b has a pneumatic cylinder that connects the respective rotation axis 10a 10b to the respective support means 8a 8b.

The rotational movement of each brush 9a 9b is actuated by a respective electric rotation motor 12a 12b connected to the corresponding rotation axis 10a 10b.

The washing system comprises detection means of the washing pressure exerted by the brushes 9a 9b on the vehicle 2.

In a preferred configuration of the invention, the washing pressure detection means is connected to a respective rotation motor 12a 12b and is configured to detect the electric intake of this motor.

In this manner, a detected increase in the electric intake of the motor corresponds to a greater contact surface between the brushes and the side surface of the vehicle. The washing system 1 comprises a control unit 3 connected to the gearmotor units of the support means and to the detection means connected preferably to the rotation motors 12a 12b of the brushes 9a 9b.

Preferably, the control unit is connected to the translation motor unit of the portal. In particular, the control unit is programmed with at least one first washing programme part.

The first programme part drives the portal 5 from a first position to a second position on the guide 4, passing the portal 5 over the vehicle 2 and in particular passing the brushes 9a, 9b over the sides of the vehicle.

The first position and the second position are preferably located respectively at the front and the rear of the vehicle 2, or vice versa.

The first programme part deactivates the locking means 11a 11b, leaving the brushes 9a 9b free to oscillate so as to adapt dynamically to the sides of the vehicle 2 during the passage of the portal 5.

It should be noted that the first programme part commands detection of the current value of the washing pressure on the sides of the vehicle during the passage of the portal 5 over the vehicle 2.

Once the current value of the washing pressure on the sides is detected, the first programme part compares the current value with a threshold value for the entire duration of the passage of the portal 5 and commands the reciprocal movement of the support means 8a 8b so as to maintain the current value of the washing pressure on the sides of the vehicle equal to said threshold value.

It should be noted that if the current value of the washing pressure is lower than the threshold value, the control unit 3 is programmed to command reciprocal approaching of the support means 8a 8b.

On the other hand, if the value of the current pressure is greater than the threshold value, the control unit 3 is programmed to command reciprocal distancing of the support means 8a 8b.

Substantially, the first programme part is used for a first washing pass of the sides of the vehicle 2, leaving the brushes 9a 9b not rigidly constrained, so as to cover the greatest possible surface of the sides of the vehicle.

The control unit 3 is programmed with at least a second programme part that locks said portal 5 at the first position along the guide 4.

As disclosed previously, in one preferred mode the first position of the portal 5 corresponds to the front of the vehicle for washing the front of the vehicle.

The second programme part activates the locking means 11a 11b so as to constrain rigidly the orientation of the rotation axis 11a, 11b of each brush 9a, 9b.

Once the orientation of the brushes 9a 9b is locked, the second programme part commands reciprocal movement of the support means 9a 9b and consequently of the brushes 8a, 8b.

The control unit 3 is further programmed with a third programme part, which is identical to the second programme part, but is to be executed in a second locked position of the portal 5.

In particular, the third programme part locks the portal 5 at the second position along said guide 4 and commands reciprocal movement of the support means 8a 8b. In this case, the second position along the guide 4 is preferably located at the rear of the vehicle 2 to wash the rear of the vehicle.

Preferably, the orientation of the rotation axis 10a 10b of the brushes 9a 9b in the second and in the third programme part is locked in a vertical position.

In a preferred embodiment of the invention, in the second and in the third washing programme part, the movement of the support means occurs in a first stage with the reciprocal approaching of the support means 8a 8b, such that the brushes 9a 9b meet at the centre line of the front and the rear of the vehicle 2.

In a second stage, the movement of the support means 8a 8b occurs with a synchronous displacement of the support means 8a 8b, and correspondingly of the brushes 9a 9b, first on one side and then on the other with respect to the centre line (front-rear) of the vehicle, so as to avoid a central non-brushed strip remaining on the front and rear of the vehicle 2.

The control unit 3 is programmed with at least one fourth washing programme part that passes the portal 5 over the vehicle 2 from the second to the first position of the portal 5 to wash the sides with two alternative modes of orientation of the brushes 9a 9b.

Substantially, the fourth programme part corresponds to the second washing pass of the sides of the vehicle.

The fourth washing programme part drives the portal 5 from the second position to the first position on the guide 4, passing the portal 5 over the vehicle 2.

In the fourth programme part, once the portal 5 is driven, alternatively the locking means 11a 11b is deactivated or activated, leaving said brushes 9a 9b free to oscillate so as to adapt dynamically to the shape of the sides of the vehicle 2 or, respectively, constrain rigidly the brushes 9a 9b so as to lock the orientation of the rotation axis 10a 10b.

During the passage of the portal 5 over the vehicle 2, the fourth programme part commands the detection of the current value of the washing pressure, compares the current value of the washing pressure with a threshold value and commands the reciprocal movement of said support means 8a 8b so as to maintain the current value of the washing pressure of the sides of the vehicle equal to the threshold value.

Unlike the first programme part, in which the brushes 9a 9b are free to oscillate, the fourth programme part is programmed to leave the brushes 9a 9b free to oscillate or to be constrained rigidly in one orientation, according to the vehicle to be washed.

In a preferred solution embodiment, in the fourth programme part the orientation of the brushes 9a 9b is rigidly constrained in a vertical position.

In an alternative preferred solution of the embodiment, in the fourth programme part the orientation of the brushes 9a 9b is rigidly constrained in a tilted position. The present invention also relates to a washing method with a washing system 1 of a vehicle as disclosed previously.

This method comprises the steps of setting a threshold value of the washing pressure exerted by the brushes 9a 9b on the sides of the vehicle and driving the portal 5 from a first position to a second position on the guide 4, passing the portal 5 over the vehicle 2.

The method comprises, during the passage of the portal 5 over the vehicle 2, the further steps of deactivating the locking means 11a 11b, leaving the brushes 9a 9b free to oscillate so as to adapt dynamically to the shape of the sides of the vehicle 2 during the passage of the portal, commanding detection of the current value of the washing pressure of the sides, comparing the current value of the washing pressure with the set threshold value and in the event of a deviation between the current value and the threshold value commanding the reciprocal movement of the support means 8a 8b so as to eliminate the deviation.

## Claims

1. A washing system (1) of a vehicle (2) comprising:
a control unit (3),
a platform having a longitudinal translation guide (4),
a portal (5) mounted in a translatable manner along said guide (4) for the passage on the vehicle (2), said portal (5) comprising at least two diametrically opposite uprights (6a, 6b) that are connected by at least one cross member (7),
at least two support means (8a, 8b) supported slidingly by said cross member (7) along said cross member (7),
at least two brushes (9a, 9b), each rotating around a corresponding rotation axis (10a, 10b) hinged in aerial suspension on a corresponding support means (8a, 8b),
locking means (11a, 11b) of the orientation of each rotation axis (10a, 10b) of said brushes (9a, 9b),
detection means of the washing pressure exerted by the brushes (9a, 9b) on the vehicle (2)
**characterised in that**
said control unit (3) is programmed with at least one first washing programme part that:
drives the portal (5) from a first position to a second position on the guide (4) by making the portal (5) pass onto the vehicle (2),
deactivates said locking means (11a, 11b), leaving said brushes (9a, 9b) free to oscillate so as to adapt dynamically to the shape of the sides of the vehicle (2) during said passage,
commands detection of the current value of the washing pressure of the sides of the vehicle (2) during said passage,
compares said current value of the washing pressure with a threshold value during said passage,
commands reciprocal movement of said support means (8a, 8b) so as to maintain during said passage the current value of the washing pressure of the sides of the vehicle (2) the same as said threshold value.

2. The washing system (1) according to the preceding claim, **characterized in that** said control unit (3) is programmed with at least one second washing programme part that:
locks said portal (5) at said first position along said guide (4),
activates said locking means (11a, 11b) so as to lock the orientation of the rotation axis (10a, 10b) of said brushes (9a, 9b), and
commands reciprocal movement of said support means (8a, 8b).

3. The washing system (1) according to any preceding claim, **characterized in that** said control unit (3) is programmed with at least one third washing programme part that:
locks said portal (5) at said second position along said guide (4).
activates said locking means (11a, 11b) so as to lock the orientation of the rotation axis (10a, 10b) of said brushes (9a, 9b), and
commands reciprocal movement of said support means (8a, 8b).

4. The washing system (1) according to any one of claims 2 and 3 **characterized in that** said orientation of the rotation axis (10a, 10b) of said brushes (9a, 9b) is locked in a vertical position.

5. The washing system (1) according to any preceding claim, **characterized in that** said control unit (3) is programmed with at least one fourth washing programme part that:
drives the portal (5) from said second position to said first position on the guide (4) by making the portal (5) pass onto the vehicle (2),
deactivates said locking means (11a, 11b), leaving said brushes (9a, 9b) free to oscillate so as to adapt dynamically to the shape of the sides of the vehicle (2) during said passage,
commands detection of the current value of the washing pressure of the sides of the vehicle during said passage,
compares said current value of the washing pressure with a threshold value during said passage,
commands reciprocal movement of said support means (8a, 8b) so as to maintain during said passage the current value of the washing pressure the same as said threshold value.

6. The washing system (1) according to any one of claims 1 to 4, **characterized in that** said control unit (3) is programmed with at least one fourth washing programme part that:
drives the portal (5) from said second position to said first position on the guide (4) by making the portal (5) pass onto the vehicle (2),
activates said locking means (11a, 11b) so as to lock the orientation of the rotation axis (10a, 10b) of said brushes (9a, 9b),
commands detection of the current value of the washing pressure of the sides of the vehicle (2) during said passage,
compares said current value of the washing pressure with a threshold value during said passage,
commands reciprocal movement of said support means (8a, 8b) so as to maintain during said passage the current value of the washing pressure of the sides of the vehicle (2) the same as said threshold value.

7. The washing system (1) according to the preceding claim, **characterized in that** the orientation of the rotation axis (10a, 10b) of said brushes (9a, 9b) is locked in a vertical position.

8. The washing system (1) according to claim 6, **characterized in that** the orientation of the rotation axis (10a, 10b) of said brushes (9a, 9b) is locked in a tilted position.

9. The washing system (1) according to any preceding claim, **characterized in that** each detection means of the washing pressure exerted by the brushes (9a, 9b) on the vehicle (2) detects electrical absorption of a corresponding rotation motor (12a, 12b) of said brushes (9a, 9b).

10. A washing method with a washing system (1) of a vehicle (2) comprising:
a control unit (3),
a platform having a longitudinal translation guide (4),
a portal (5) mounted in a translatable manner along said guide (4) for the passage on the vehicle (2), said portal (5) comprising at least two diametrically opposite uprights (6) that are connected by at least one cross member (7),
at least two support means (8a, 8b) supported slidingly by said cross member (7) along said cross member (7),
at least two brushes (9a, 9b), each rotating around a corresponding rotation axis (10a, 10b) hinged in aerial suspension on a corresponding support means (8a, 8b),
locking means (11a, 11b) of the orientation of the rotation axis (10a, 10b) of said brushes (9a, 9b),
detection means of the washing pressure exerted by the brushes (9a, 9b) on the vehicle (2)
**characterized in that** it comprises the following steps of:
- setting a threshold value of the washing pressure exerted by the brushes on the sides of the vehicle;
- driving the portal (5) from at least a first position to at least a second position on the guide (4) by making the portal (5) pass onto the vehicle (2),
- deactivating said locking means (11a, 11b) by leaving said brushes (9a, 9b) free to oscillate so as to adapt dynamically to the shape of the sides of the vehicle (2) during said passage,
- commanding detection of the current value of the washing pressure of the sides of the vehicle (2) during said passage,
- comparing said current value of the washing pressure with a threshold value during said passage, and
- in the event of a deviation between said current value and said threshold value commanding reciprocal movement of said support means (8a, 8b) so as to cancel said deviation.

## Patentansprüche

1. Waschsystem (1) eines Fahrzeugs (2), umfassend:
eine Steuereinheit (3),
eine Plattform mit einer Längsverschiebungsführung (4), ein Portal (5), das auf eine verschiebbare Weise entlang der Führung (4) für die Überfahrt über das Fahrzeug (2) montiert ist, wobei das Portal (5) mindestens zwei diametral gegenüberliegende Pfosten (6a, 6b) umfasst, die durch mindestens einen Querträger (7) verbunden sind,
mindestens zwei Stützmittel (8a, 8b), die gleitend durch den Querträger (7) entlang des Querträgers (7) abgestützt sind,
mindestens zwei Bürsten (9a, 9b), die sich jeweils um eine entsprechende Rotationsachse (10a, 10b) drehen, die in einer Luftaufhängung an einem entsprechenden Stützmittel (8a, 8b) angelenkt ist,
Verriegelungsmittel (11a, 11b) der Ausrichtung einer jeden Rotationsachse (10a, 10b) der Bürsten (9a, 9b), Erfassungsmittel des Waschdrucks, den die Bürsten (9a, 9b) auf das Fahrzeug (2) ausüben,
**dadurch gekennzeichnet, dass**
die Steuereinheit (3) mit mindestens einem ersten Waschprogrammteil programmiert ist, der:
das Portal (5) von einer ersten Position zu einer zweiten Position auf der Führung (4) fährt, indem das Portal (5) über das Fahrzeug (2) überführt wird,
die Verriegelungsmittel (11a, 11b) deaktiviert, indem die Bürsten (9a, 9b) zum Schwingen frei gelassen werden, damit sie sich während der Überfahrt dynamisch an die Form der Seiten des Fahrzeugs (2) anpassen,
die Erfassung des aktuellen Wertes des Waschdrucks der Seiten des Fahrzeugs (2) während der Überfahrt steuert, den aktuellen Wert des Waschdrucks mit einem Schwellenwert während der Überfahrt vergleicht,
die wechselseitige Bewegung der Stützmittel (8a, 8b) steuert, um während der Überfahrt den aktuellen Wert des Waschdrucks der Seiten des Fahrzeugs (2) gleich wie der Schwellenwert aufrechtzuerhalten.

2. Waschsystem (1) nach dem vorhergehenden Anspruch, **dadurch gekennzeichnet, dass** die Steuereinheit (3) mit mindestens einem zweiten Waschprogrammteil programmiert ist, der:
das Portal (5) an der ersten Position entlang der Führung (4) verriegelt,
die Verriegelungsmittel (11a, 11b) aktiviert, um die Ausrichtung der Rotationsachse (10a, 10b) der Bürsten (9a, 9b) zu verriegeln, und
die gegenseitige Bewegung der Stützmittel (8a, 8b) steuert.

3. Waschsystem (1) nach einem vorhergehenden Anspruch, **dadurch gekennzeichnet, dass** die Steuereinheit (3) mit mindestens einem dritten Waschprogrammteil programmiert ist, der:
das Portal (5) an der zweiten Position entlang der Führung (4) verriegelt,
die Verriegelungsmittel (11a, 11b) aktiviert, um die Ausrichtung der Rotationsachse (10a, 10b) der Bürsten (9a, 9b) zu verriegeln, und
die gegenseitige Bewegung der Stützmittel (8a, 8b) steuert.

4. Waschsystem (1) nach einem der Ansprüche 2 und 3, **dadurch gekennzeichnet, dass** die Ausrichtung der Rotationsachse (10a, 10b) der Bürsten (9a, 9b) in einer vertikalen Position verriegelt ist.

5. Waschsystem (1) nach einem vorhergehenden Anspruch, **dadurch gekennzeichnet, dass** die Steuereinheit (3) mit mindestens einem vierten Waschprogrammteil programmiert ist, der:
das Portal (5) von der zweiten Position zu der ersten Position auf der Führung (4) fährt, indem das Portal (5) über das Fahrzeug (2) überführt wird,
die Verriegelungsmittel (11a, 11b) deaktiviert, indem die Bürsten (9a, 9b) zum Schwingen frei gelassen werden, damit sie sich während der Überfahrt dynamisch an die Form der Seiten des Fahrzeugs (2) anpassen,
die Erfassung des aktuellen Wertes des Waschdrucks der Seiten des Fahrzeugs während der Überfahrt steuert, den aktuellen Wert des Waschdrucks mit einem Schwellenwert während der Überfahrt vergleicht,
die wechselseitige Bewegung der Stützmittel (8a, 8b) steuert, um während der Überfahrt den aktuellen Wert des Waschdrucks gleich wie der Schwellenwert aufrechtzuerhalten.

6. Waschsystem (1) nach einem der Ansprüche 1 bis 4, **dadurch gekennzeichnet, dass** die Steuereinheit (3) mit mindestens einem vierten programmierten Waschteil programmiert ist, der:
das Portal (5) von der zweiten Position zu der ersten Position auf der Führung (4) fährt, indem das Portal (5) über das Fahrzeug (2) überführt wird,
die Verriegelungsmittel (11a, 11b) aktiviert, um die Ausrichtung der Rotationsachse (10a, 10b) der Bürsten (9a, 9b) zu verriegeln,
die Erfassung des aktuellen Wertes des Waschdrucks der Seiten des Fahrzeugs (2) während der Überfahrt steuert, den aktuellen Wert des Waschdrucks mit einem Schwellenwert während der Überfahrt vergleicht,
die wechselseitige Bewegung der Stützmittel (8a, 8b) steuert, um während der Überfahrt den aktuellen Wert des Waschdrucks der Seiten des Fahrzeugs (2) gleich wie der Schwellenwert aufrechtzuerhalten.

7. Waschsystem (1) nach dem vorhergehenden Anspruch, **dadurch gekennzeichnet, dass** die Ausrichtung der Rotationsachse (10a, 10b) der Bürsten (9a, 9b) in einer vertikalen Position verriegelt ist.

8. Waschsystem (1) nach Anspruch 6, **dadurch gekennzeichnet, dass** die Ausrichtung der Rotationsachse (10a, 10b) der Bürsten (9a, 9b) in einer gekippten Position verriegelt ist.

9. Waschsystem (1) nach einem vorhergehenden Anspruch, **dadurch gekennzeichnet, dass** ein jedes Erfassungsmittel des von den Bürsten (9a, 9b) auf das Fahrzeug (2) ausgeübten Waschdrucks die elektrische Absorption eines entsprechenden Rotationsmotors (12a, 12b) der Bürsten (9a, 9b) erfasst.

10. Waschverfahren mit einem Waschsystem (1) eines Fahrzeugs (2), umfassend:
eine Steuereinheit (3),
eine Plattform mit einer Längsverschiebungsführung (4),
ein Portal (5), das auf eine verschiebbare Weise entlang der Führung (4) für die Überfahrt über das Fahrzeug (2) montiert ist, wobei das Portal (5) mindestens zwei diametral gegenüberliegende Pfosten (6) umfasst, die durch mindestens einen Querträger (7) verbunden sind, mindestens zwei Stützmittel (8a, 8b), die gleitend durch den Querträger (7) entlang des Querträgers (7) abgestützt sind,
mindestens zwei Bürsten (9a, 9b), die sich jeweils um eine entsprechende Rotationsachse (10a, 10b) drehen, die in einer Luftaufhängung an einem entsprechenden Stützmittel (8a, 8b) angelenkt ist,
Verriegelungsmittel (11a, 11b) der Ausrichtung der Rotationsachse (10a, 10b) der Bürsten (9a, 9b),
Erfassungsmittel des Waschdrucks, den die Bürsten (9a, 9b) auf das Fahrzeug (2) ausüben,
**dadurch gekennzeichnet, dass** es die folgenden Schritte umfasst:
- Einstellen eines Schwellenwerts für den Waschdruck, den die Bürsten auf den Seiten des Fahrzeugs ausüben;
- Fahren des Portals (5) von mindestens einer ersten Position zu mindestens einer zweiten Position auf der Führung (4), indem das Portal (5) über das Fahrzeug (2) überführt wird,
- Deaktivieren der Verriegelungsmittel (11a, 11b), indem die Bürsten (9a, 9b) zum Schwingen frei gelassen werden, damit sie sich während der Überfahrt dynamisch an die Form der Seiten des Fahrzeugs (2) anpassen,
- Steuern der Erfassung des aktuellen Wertes des Waschdrucks der Seiten des Fahrzeugs (2) während der Überfahrt,
- Vergleichen des aktuellen Wertes des Waschdrucks mit einem Schwellenwert während der Überfahrt, und
- im Falle einer Abweichung zwischen dem aktuellen Wert und dem Schwellenwert, Steuern einer wechselseitigen Bewegung der Stützmittel (8a, 8b), um die Abweichung aufzuheben.

## Revendications

1. Système de lavage (1) d'un véhicule (2), comprenant :
une unité de commande (3),
une plateforme comportant un guide de translation longitudinale (4),
un portique (5) monté de manière à pouvoir être translaté le long dudit guide (4) pour le passage sur le véhicule (2), ledit portique (5) comprenant au moins deux montants diamétralement opposés (6a, 6b) étant reliés par au moins une traverse (7),
au moins deux moyens de support (8a, 8b) supportés de manière coulissante par ladite traverse (7) le long de ladite traverse (7),
au moins deux brosses (9a, 9b), chacune tournant autour d'un axe de rotation (10a, 10b) correspondant monté articulé en suspension aérienne sur un moyen de support (8a, 8b) correspondant,
des moyens de blocage (11a, 11b) de l'orientation de chaque axe de rotation (10a, 10b) desdites brosses (9a, 9b),
des moyens de détection de la pression de lavage exercée par les brosses (9a, 9b) sur le véhicule (2),
**caractérisé en ce que**
ladite unité de commande (3) est programmée avec au moins une première partie de programme de lavage qui :
entraîne le portique (5) d'une première position à une seconde position sur le guide (4) en faisant passer le portique (5) sur le véhicule (2),
désactive lesdits moyens de blocage (11a, 11b), en laissant lesdites brosses (9a, 9b) libres d'osciller de manière à s'adapter dynamiquement à la forme des côtés du véhicule (2) pendant ledit passage,
commande la détection de la valeur actuelle de la pression de lavage des côtés du véhicule (2) pendant ledit passage,
compare ladite valeur actuelle de la pression de lavage à une valeur de seuil pendant ledit passage,
commande le mouvement réciproque desdits moyens de support (8a, 8b) de sorte à maintenir pendant ledit passage la valeur actuelle de la pression de lavage des côtés du véhicule (2) identique à ladite valeur de seuil.

2. Système de lavage (1) selon la revendication précédente, **caractérisé en ce que** ladite unité de commande (3) est programmée avec au moins une deuxième partie de programme de lavage qui :
bloque ledit portique (5) en correspondance de ladite première position le long dudit guide (4),
active lesdits moyens de blocage (11a, 11b) de manière à bloquer l'orientation de l'axe de rotation (10a, 10b) desdites brosses (9a, 9b), et
commande le mouvement réciproque desdits moyens de support (8a, 8b).

3. Système de lavage (1) selon l'une quelconque des revendications précédentes, **caractérisé en ce que** ladite unité de commande (3) est programmée avec au moins une troisième partie de programme de lavage qui :
bloque ledit portique (5) en correspondance de ladite deuxième position le long dudit guide (4),
active lesdits moyens de blocage (11a, 11b) de manière à bloquer l'orientation de l'axe de rotation (10a, 10b) desdites brosses (9a, 9b), et
commande le mouvement réciproque desdits moyens de support (8a, 8b).

4. Système de lavage (1) selon l'une quelconque des revendications 2 et 3, **caractérisé en ce que** ladite orientation de l'axe de rotation (10a, 10b) desdites brosses (9a, 9b) est bloquée dans une position verticale.

5. Système de lavage (1) selon l'une quelconque des revendications précédentes, **caractérisé en ce que** ladite unité de commande (3) est programmée avec au moins une quatrième partie de programme de lavage qui :
entraîne le portique (5) de ladite deuxième position à ladite première position sur le guide (4) en faisant passer le portique (5) sur le véhicule (2),
désactive lesdits moyens de blocage (11a, 11b) en laissant lesdites brosses (9a, 9b) libres d'osciller de manière à s'adapter dynamiquement à la forme des côtés du véhicule (2) pendant ledit passage,
commande la détection de la valeur actuelle de la pression de lavage des côtés du véhicule pendant ledit passage,
compare ladite valeur actuelle de la pression de lavage à une valeur de seuil pendant ledit passage,
commande le mouvement réciproque desdits moyens de support (8a, 8b) de façon à maintenir pendant ledit passage la valeur actuelle de la pression de lavage identique à ladite valeur de seuil.

6. Système de lavage (1) selon l'une quelconque des revendications 1 à 4, **caractérisé en ce que** ladite unité de commande (3) est programmée avec au moins une quatrième partie programmée de lavage qui :
entraîne le portique (5) de ladite deuxième position à ladite première position sur le guide (4) en faisant passer le portique (5) sur le véhicule (2),
active lesdits moyens de blocage (11a, 11b) de manière à bloquer l'orientation de l'axe de rotation (10a, 10b) desdites brosses (9a, 9b),
commande la détection de la valeur actuelle de la pression de lavage des côtés du véhicule (2) lors dudit passage,
compare ladite valeur actuelle de la pression de lavage à une valeur de seuil pendant ledit passage,
commande le mouvement réciproque desdits moyens de support (8a, 8b) de manière à maintenir pendant ledit passage la valeur actuelle de la pression de lavage des côtés du véhicule (2) identique à ladite valeur de seuil.

7. Système de lavage (1) selon la revendication précédente, **caractérisé en ce que** l'orientation de l'axe de rotation (10a, 10b) desdites brosses (9a, 9b) est bloquée dans une position verticale.

8. Système de lavage (1) selon la revendication 6, **caractérisé en ce que** l'orientation de l'axe de rotation (10a, 10b) desdites brosses (9a, 9b) est bloquée dans une position inclinée.

9. Système de lavage (1) selon l'une quelconque des revendications précédentes, **caractérisé en ce que** chaque moyen de détection de la pression de lavage exercée par les brosses (9a, 9b) sur le véhicule (2) détecte l'absorption électrique d'un moteur de rotation (12a, 12b) correspondant desdites brosses (9a, 9b).

10. Procédé de lavage avec un système de lavage (1) d'un véhicule (2), comprenant :
une unité de commande (3),
une plateforme comportant un guide de translation longitudinale (4),
un portique (5) monté de manière à pouvoir être translaté le long dudit guide (4) pour le passage sur le véhicule (2), ledit portique (5) comprenant au moins deux montants diamétralement opposés (6) étant reliés par au moins une traverse (7),
au moins deux moyens de support (8a, 8b) supportés de manière coulissante par ladite traverse (7) le long de ladite traverse (7),
au moins deux brosses (9a, 9b), chacune tournant autour d'un axe de rotation (10a, 10b) correspondant monté articulé en suspension aérienne sur un moyen de support (8a, 8b) correspondant,
des moyens de blocage (11a, 11b) de l'orientation de l'axe de rotation (10a, 10b) desdites brosses (9a, 9b), des moyens de détection de la pression de lavage exercée par les brosses (9a, 9b) sur le véhicule (2),
**caractérisé en ce qu'**il comprend les étapes suivantes de :
- fixer une valeur de seuil de la pression de lavage exercée par les brosses sur les côtés du véhicule ;
- entraîner le portique (5) d'au moins une première position à au moins une deuxième position sur le guide (4) en faisant passer le portique (5) sur le véhicule (2),
- désactiver lesdits moyens de blocage (11a, 11b) en laissant lesdites brosses (9a, 9b) libres d'osciller de manière à s'adapter dynamiquement à la forme des côtés du véhicule (2) pendant ledit passage,
- commander la détection de la valeur actuelle de la pression de lavage des côtés du véhicule (2) pendant ledit passage,
- comparer ladite valeur actuelle de la pression de lavage à une valeur de seuil pendant ledit passage, et
- dans le cas d'une déviation entre ladite valeur actuelle et ladite valeur de seuil, commander un mouvement réciproque desdits moyens de support (8a, 8b) de manière à annuler ladite déviation.
